# EUROPÄISCHE PATENTSCHRIFT

(11) **EP 1 413 727 B1**
(45) Veröffentlichungstag und Bekanntmachung des Hinweises auf die Patenterteilung: **05.04.2006**
(21) Anmeldenummer: 02102483.1
(22) Anmeldetag: 25.10.2002
(51) Int. Cl.: F02D 41/04, F02D 9/02

(54) **VERFAHREN ZUM ABSTELLEN EINER BRENNKRAFTMASCHINE UND BRENNKRAFTMASCHINE GEEIGNET ZUR DURCHFUEHRUNG DIESES VERFAHRENS**
Method for shutdown of an internal combustion engine and internal combustion engine to carry out this method
Méthode pour l'arrêt d'un moteur à combustion interne et moteur à combustion interne pour la mise en oeuvre de cette méthode

(43) Veröffentlichungstag der Anmeldung: 28.04.2004
(73) Patentinhaber: Ford Global Technologies, LLC, Dearborn, MI 48126 (US)
(72) Erfinder: Grieser, Klemens, 40764, Langenfeld (DE); Kramer, Ulrich, 51427, Bergisch Gladbach (DE); Badke, Klaus, 50670, Koeln (DE)
(74) Vertreter: Drömer, Hans-Carsten

(56) Entgegenhaltungen:
- EP-A- 1 217 195
- EP-A- 1 367 256
- DE-A- 10 055 112
- DE-A- 19 835 045
- DE-A- 19 848 368
- DE-C- 19 735 455
- US-A- 4 735 179
- PATENT ABSTRACTS OF JAPAN vol. 007, no. 279 (M-262), 13. Dezember 1983 (1983-12-13) & JP 58 155238 A (TOYOTA JIDOSHA KOGYO KK), 14. September 1983 (1983-09-14)

## Beschreibung

Die Erfindung betrifft ein \'erfahren zum Abstellen einer Brennkraftmaschine und eine zur Durchführung dieses Verfahrens geeignete Brennkraftmaschine.

Heutige Brennkraftmaschinen können üblicherweise nicht aus dem Stillstand ohne ein Hilfsaggregat in Betrieb genommen werden. In dem oder den Zylindern von Brennkraftmaschinen, bei denen der Kraftstoff innerhalb des Ansaugtraktes der Verbrennungsluft zugeführt wird, befindet sich in der Regel kein oder nur wenig zündfähiges Luft-Kraftstoff-Gemisch, so daß eine Aktivierung der Zündquelle einer Fremdzündung nicht ausreicht eine Verbrennung in Gang zu setzen. Es wird daher ein - üblicherweise elektrisch betriebener - Hilfsantrieb, ein sogenannter Anlasser, verwendet, um die Brennkraftmaschine auf eine sogenannte Startdrehzahl zu bringen. Bei dieser Drehzahl wird genügend zündfähiges Gemisch in die Zyli n-der gesaugt, mittels einer Fremdzündeinrichtung entzündet und so die Brennkraftmaschine in Betrieb genommen. Der Anlasser kann dann abgeschaltet werden und die Brennkraftmaschine dreht sich aus eigener Kraft weiter.

Anders verhält sich die Situation bei Brennkraftmaschinen, bei denen der Kraftstoff direkt in mindestens einen Zylinder eingebracht wird, wobei der Kraftstoff üblicherweise unter Druck in den mindestens einen Zylinder eingespritzt wird. Wird nun bei einer stillstehenden Brennkraftmaschine Kraftstoff in einen oder mehrere Zylinder eingespritzt und anschließend gezündet, so kann die entstehende Gaskraft ausreichen, um einen zugehörigen Kolben zu bewegen. Die Bewegung des Kolbens gibt über einen Pleuel somit der Kurbelwelle einen Drehimpuls, der ausreichend sein kann, die normale Abfolge der Takte einer Brennkraftmaschine einzuleiten. Somit kann die Brennkraftmaschine ohne Benutzung eines Anlassers in Betrieb genommen werden bzw. direkt gestartet werden.

Allerdings sind mehrere Voraussetzungen zu erfüllen, damit eine Brennkraftmaschine direkt in der oben beschriebenen Art starten kann. So sollte sich mindestens ein Kolben eines Zylinders der Brennkraftmaschine in einer Position befinden, in der ein Einspritzen von Kraftstoff und anschließendes Zünden des entstandenen Luft-Kraftstoffgemisches tatsächlich zu einer Bewegung des in dem Zylinder befindlichen Kolbens führt. Bei einer Viertaktbrennkraftmaschine müßte der Kolben sich also im Expansions- oder Arbeitstakt befinden, wobei das mindestens eine zugehörige Auslaßgaswechselventil noch nicht geöffnet sein darf. Dies kann z. B. in einer Position von ca. 5° bis 10° Kurbelwinkel nach oberem Totpunkt (OT) sein. Bei einer Position von ca. 5° bis 10° vor OT würde sich Kolben auch bewegen. Allerdings würde sich dann die Kurbelwelle entgegen der gewünschten Drehrichtung bewegen. In der DE 198 35 045 wird beispielhaft ein Verfahren zum Direktstart beschrieben. Es wird dabei ein geeigneter Brennraum, gebildet aus Zylinder und Kolben, identifiziert, der sich im Arbeitstakt befindet und genügend Luftvolumen enthält. Anschließend wird eine vorgegebene Brennstoffmenge eingespritzt und gezündet. Allerdings geht die DE 198 35 045 davon aus, daß trotzdem noch ein, wenn auch kleiner dimensionierter, Anlasser zum Starten der Brennkraftmaschine benötigt wird.

In der DE 198 17 497 wird ein etwas anderer Ansatz gewählt. Hier wird durch einen direkt auf der Kurbelwelle montierten Startermotor, der nach dem Start als Generator dient, ein sogenannter Starter-Generator, die Kurbelwelle in eine bevorzugte Position bewegt. In dieser bevorzugten Position kann z. B. das Anlassen der Brennkraftmaschine durch das oben beschriebene Verfahren des Einspritzen von Kraftstoffs und anschließendes Zünden erheblich erleichtert werden.

In der WO 01/48373 wird die gewünschte Kolbenposition dadurch erreicht, daß bereits beim Abstellen der Brennkraftmaschine diese gewünschte Position angesteuert wird. Da nach Abstellen der Zündung und der Kraftstoffzufuhr die Brennkraftmaschine sich auf Grund der Massenträgheit noch einige Umdrehungen weiterbewegt, das sogenanntes Auslaufen der Brennkraftmaschine, bis sie durch die Reibungs- und Gaskräfte zum Stillstand gekommen ist, kann beispielsweise durch ein kontrolliertes Abstellen, durch ein Weiterbewegen der Kurbelwelle mittels eines Hilfsantriebes oder mittels Ausführen zusätzlicher einzelner Arbeitstakte während des Abstellens eine geeignete Position zum Direktstart erreicht werden. Der DE 192.48.868 beschreibt ein Verfahren gemäß dem Oberbegriff des Anspruchs 1.

Die genannten Verfahren weisen jedoch den Nachteil auf, daß sie sich nur auf das Erreichen einer günstigen Kolbenposition zum direkten Start mittels Hilfsantrieben oder zur Erleichterung des Starts einer Brennkraftmaschine konzentrieren. Sie vernachlässigen dabei, daß sich in dem oder den Zylindern noch größere Mengen Verbrennungsprodukte befinden können, so daß ein eventuell später stattfindendes direktes Anlassen der Brennkraftmaschine mittels des oben beschriebenen Verfahrens auf Grund mangelnden Sauerstoffs in dem oder den Zylindern nicht durchführbar ist.

Vor diesem Hintergrund war es Aufgabe der vorliegenden Erfindung, ein Verfahren zu entwickeln, welches das kontrollierte Abstellen der Brennkraftmaschine mit einfachen Mitteln bewerkstelligen kann und gleichzeitig ein Maximum an Sauerstoff für einen direkten Start innerhalb der Brennräume der Brennkraftmaschine zurückläßt, sowie eine Brennkraftmaschine zur Durchführung dieses Verfahrens.

Diese Aufgabe wird durch ein Verfahren mit den Merkmalen des Anspruchs 1 sowie durch eine Brennkraftmaschine mit den Merkmalen des Anspruchs 6 gelöst.

Vorteilhafte Ausgestaltungen sind in den Unteransprüchen enthalten.

Das erfindungsgemäße Verfahren zum kontrollierten Abstellen einer Brennkraftmaschine mit Fremdzündung zeichnet sich dadurch aus, daß sich während des Auslaufens der Brennkraftmaschine in den Kompressions- bzw. Arbeitstakten ein möglichst großer Zylinderinnendruck aufbauen kann. Dies läßt sich dadurch erreichen, daß nach Abschalten der Fremdzündung und der Kraftstoffzufuhr die zuvor geschlossene Drosselklappe mindestens einmal um einen gewissen Drehwinkelbetrag geöffnet wird. Gegenüber dem üblichen Verfahren zum Abstellen einer Brennkraftmaschine mit geschlossener Drosselklappe wird bei dem erfindungsgemäßen Verfahren während des Abstellens deutlich mehr Frischluft in die Zylinder gesaugt. Dies bedeutet, daß der Zylinderinnendruck während der verbleibenden Kompressionstakte während des Auslaufens der Brennkraftmaschine deutlich erhöht ist gegenüber dem Zylinderinnendruck einer auslaufenden Brennkraftmaschine mit geschlossener Drosselklappe. Übliche Werte sind hier z. B. 5 bar Zylinderinnendruck bei geschlossener Drosselklappe gegenüber z. B. 20 bar Zylinderinnendruck bei völlig geöffneter Drosselklappe. Durch den erhöhten Zylinderinnendruck entstehen höhere Gaskräfte. Die Reibungskräfte ändern sich nur geringfügig. Das Verhältnis von Gaskräften zu Reibungskräften wird somit größer. Die Gaskräfte sind kurbelwinkelabhängig. Sie erreichen ihr Maximum im jeweiligen oberen Totpunkt (Hochdruck OT). Das Kräftegleichgewicht der Gaskräfte des Expansions- und des Kompressionszylinders liegt bei etwa 90°KW nach OT (bezogen auf den Expansionszylinder). Diese Winkellage ist eine vorteilhafte Abstellposition, da sie das anschließende Wiederanlassen begünstigt. Hohe Gaskräfte begünstigen somit eine für den Direktstart geeignete Abstellposition. Von Vorteil ist es außerdem noch, daß bei geöffneter Drosselklappe durch die in die Brennkraftmaschine einströmende Frischluft eventuell noch vorhandene Verbrennungsprodukte aus den Brennräumen der Brennkraftmaschine entfernt werden. Dadurch wird sichergestellt, daß bei einem Direktstart bestehend aus Einspritzen von Kraftstoff in einen Brennraum und Zünden des entstehenden Kraftstoff-Luft Gemisches genügend Sauerstoff für eine Verbrennung des Kraftstoffs zur Verfügung steht.

Es ist allerdings auch vorstellbar, daß das beschriebene Verfahren bei Brennkraftmaschine ohne Drosselklappe und mit unabhängig einzeln ansteuerbaren Gaswechselventilen durch eine entsprechende Ansteuerung der Gaswechselventile ausgeführt werden kann. Letztendlich stehen hier die Drosselklappe bzw. die Ansteuerung der Gaswechselventil stellvertretend für ein variables Gaszumeßsystem, welches die Zufuhr von Verbrennungsluft in die Brennkraftmaschine kontrolliert.

Wenn während des Auslaufens der Brennkraftmaschine die Drosselklappe geöffnet ist, können sich Komfortprobleme durch Schütteln oder Ruckeln der Brennkraftmaschine ergeben. In einer bevorzugten Ausgestaltung der Erfindung wird die Drosselklappe unmittelbar nach dem Abstellen des Motors nur kurz geöffnet um die Zylinder mit Frischluft zu spülen. Danach wird die Drosselklappe während des Auslaufens mindestens einmal geschlossen, um ein weicheres Auslaufen der Brennkraftmaschine zu erzielen. Rechtzeitig bevor die Brennkraftmaschine zum völligen Stillstand kommt, wird die Drosselklappe noch einmal geöffnet, um einen kontrollierten Stillstand zu erreichen. Gleichzeitig wird so noch einmal die Frischluftzufuhr in die Verbrennungsräume maximiert.

Gemäß einer Weiterbildung des Verfahrens wird zur Ansteuerung der Drosselklappe ein Drehzahlsignal herangezogen. Während des Auslaufens der Brennkraftmaschine kann so z. B. bei Unterschreiten einer bestimmten Drehzahl die Drosselklappe geschlossen bzw. geöffnet werden. Ein Verfahren der zuvor beschriebenen Art läßt sich so mit einfachen Mitteln verwirklichen.

Bei einer anderen Weiterbildung der Erfindung wird der Unterdruck im Ansaugrohr oder Ansaugtrakt der Brennkraftmaschine gemessen. Das so entstehende Signal kann ebenfalls zur Ansteuerung der Drosselklappe verwendet werden. So könnte z. B. ein Erreichen eines minimalen Unterdrucks ein Signal zum Schließen der Drosselklappe geben, wie auch das Erreichen eines zuvor bestimmten maximalen Unterdrucks kurz vor dem Stillstand der Brennkraftmaschine ein Signal zum Öffnen der Drosselklappe geben kann. Da ein entsprechendes Drucksignal bei direkteinspritzenden Brennkraftmaschinen häufig schon vorhanden ist, läßt sich diese Variante einfach umsetzen.

Bei einer bevorzugten Ausbildung der Erfindung wird zur Drosselklappenansteuerung das Kurbelwellen- oder Nockenwellendrehwinkelsignal herangezogen. Wird das jeweilige Drehwinkelsignal aufintegriert, so läßt sich die Anzahl der Nockenwellen- oder Kurbelwellenumdrehungen z. B. nach der letzten Zündung feststellen. So kann z. B. das Öffnen oder Schließen der Drosselklappe nach einer bestimmten Anzahl von Umdrehungen angesteuert werden. Vorteilhaft ist auch hier die einfache Umsetzung des Verfahrens, ohne das zusätzliche Sensoren etc. erforderlich sind.

Wie bereits ausgeführt ist es weiterhin von Vorteil, wenn die Drosselklappe kurz vor Stillstand der Brennkraftmaschine nochmals geöffnet wird. Zum einen, damit die Brennkraftmaschine kontrolliert zum Stillstand kommt, ist es vorteilhaft die Drosselklappe beim Ansaugen des sich beim späteren Stillstand ergebenden letzten Kompressionszylinders zu öffnen. Zum anderen ist es vorteilhaft die Drosselklappe beim Ansaugen des sich beim späteren Stillstand ergebenden letzten Expansionszylinders zu öffnen, um eine maximale Frischluftzufuhr für diesen Zylinder zu erreichen, um damit für einen späteren Direktstart ausreichend Frischluft in diesem Zylinder zur Verfügung zu haben.

Die Erfindung betrifft weiterhin eine Brennkraftmaschine, welche zur Durchführung mindestens eines der genannten Verfahren geeignet ist. Die Brennkraftmaschine enthält dabei mindestens einen Verbrennungsraum gebildet aus je einem Zylinder und je einem Kolben, einen Ansauglufttrakt sowie eine Vorrichtung, den Ansaugluftstrom zu beeinflussen. Dies kann z. B. eine Drosselklappe sein. Aber auch eine separate unabhängige Steuerung der Einlaßgaswechselventile ist dazu geeignet, die genannten Verfahren durchzuführen.

Im Folgenden wird die Erfindung anhand der Figuren beispielhaft näher erläutert. Es zeigen:
- Fig. 1: einen Schnitt durch einen Zylinder einer schematische dargestellten Brennkraftmaschine mit schematisch dargestelltem Ansaugluftsystem und Drosselklappe
- Fig. 2: ein Diagramm, das einige der für das Abstellen relevanten Funktionen der Brennkraftmaschine während des Abstellens darstellt.

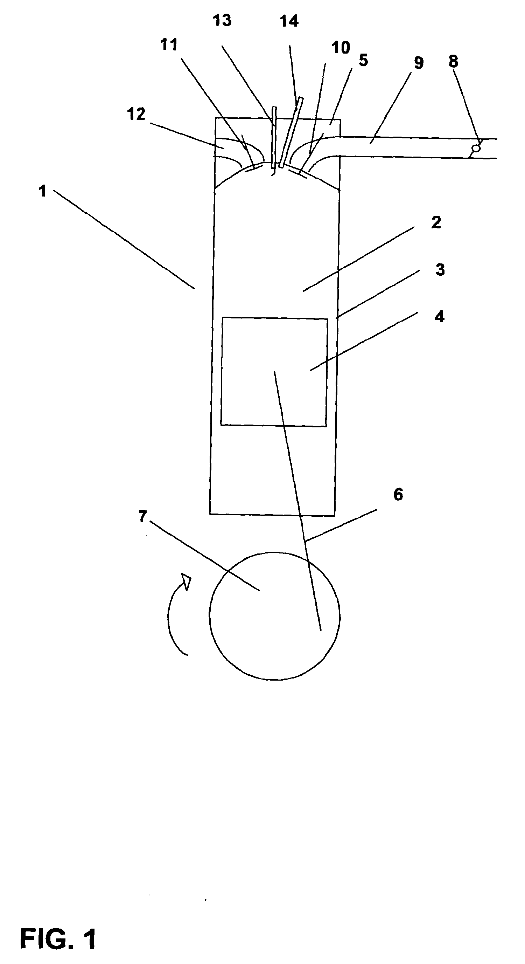

Figur 1 zeigt schematisch einen Schnitt durch eine Brennkraftmaschine 1 in der Seitenansicht. Zu erkennen sind dabei ein Brennraum 2 gebildet durch einen Zylinder 3, der von einem Kolben 4 und einem Zylinderkopf 5 begrenzt wird. Die Verbrennungsluft gelangt über die Drosselklappe 8 und einen Luftansaugkanal 9 über ein Gaswechseleinlaßventil 10 in den Brennraum 2. Durch eine Einspritzdüse 14 wird im Arbeitstakt in bekannter Weise Kraftstoff in den Brennraum 2 gespritzt und anschließend von einer Fremdzündanlage in bekannter Weise durch einen Zündfunken einer Zündkerze 13 entzündet. Die bei dieser Verbrennung des im Brennraum 2 entstandenen Kraftstoff-Luft Gemisches entstehende Gaskraft bewegt in bekannter Weise den Kolben 5 nach unten und setzt die Bewegung des Kolbens 5 in bekannter Weise über einen Pleuel 6 und eine Kurbelwelle 7 in eine Drehbewegung der Kurbelwelle 7 um. Nach der Verbrennung verlassen die Verbrennungsprodukte über ein Gaswechselauslaßventil 11 und einen Abgaskanal 12 die Brennkraftmaschine 1. Die Drehrichtung der Kurbelwelle ist mit einem Pfeil gekennzeichnet.

Erfindungsgemäß wird nun nach Abstellen der Brennkraftmaschine 1 also nach Beendigung der Kraftstoffeinspritzung durch die Einspritzdüse 14 in den Brennraum 2 und / oder dem Ausschalten der Fremdzündanlage die Drosselklappe 8 für einige Zeit geöffnet. Dies kann während der ganzen Zeit des Auslaufens der Brennkraftmaschine 1 der Fall sein oder nur für eine bestimmte Zeit oder für einige Umdrehungen der Kurbelwelle 7. Außerdem kann auch der Grad der Öffnung der Drosselklappe 8 variieren. So kann ein Öffnungswinkel von z. B. 15° schon ausreichend sein. Durch den sich im Zylinder 3 herabbewegenden Kolben 4 wird dann erheblich mehr Frischluft in den Brennraum 2 gesaugt, als es bei geschlossener Drosselklappe 8 der Fall wäre. Der dadurch deutlich erhöhte Zylinderinnendruck im Brennraum 2 während des Kompressionstaktes läßt die Brennkraftmaschine 1 in bevorzugter Kurbelwinkelstellung zum Stillstand kommen. Gleichzeitig werden durch die erhöhte Frischluftzufuhr eventuell noch im Brennraum 2 befindliche Verbrennungsprodukte durch das Gaswechselauslaßventil 11 und den Abgaskanal 12 aus dem Brennraum 2 entfernt.

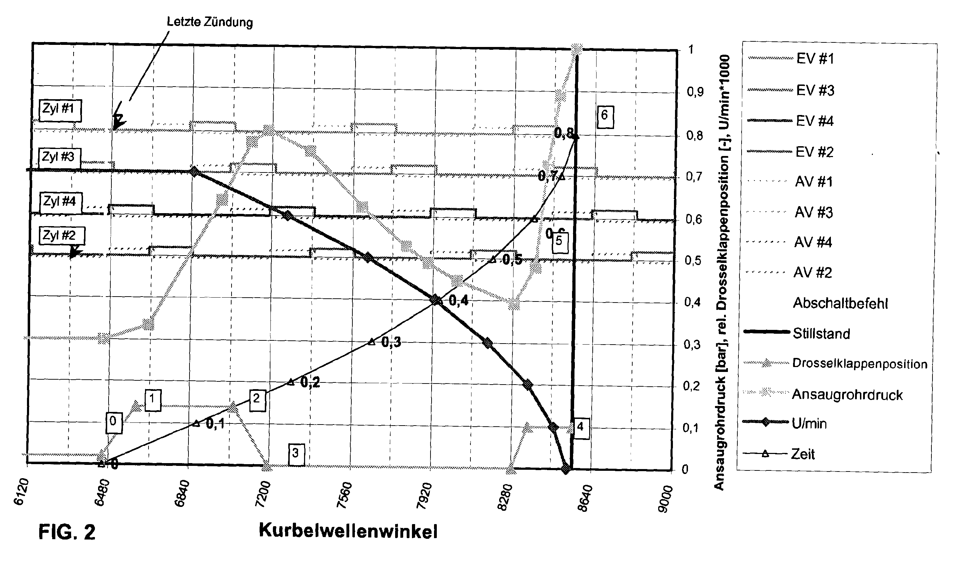

In Figur 2 ist in Form eines Diagramms der Prozeß des Auslaufens der Brennkraftmaschine mit vier Zylindern dargestellt. Aufgetragen sind hier über den Kurbelwellenwinkel das Öffnen und Schließen der Gaswechseleinlaßventile, EV #1 für das Einlaßventil des ersten Zylinders bis EV # 4 für das Einlaßventil des vierten Zylinders, das Öffnen und Schließen der Gaswechselauslaßventile, AV #1 für das Auslaßventil des ersten Zylinders bis AV # 4 für das Auslaßventil des vierten Zylinders, sowie der Ansaugrohrdruck bzw. Luftansaugrohrdruck, die Drosselklappenposition, Drehzahl der Brennkraftmaschine und die Zeit bis zum Stillstand der Brennkraftmaschine nach dem Abschaltbefehl.

Nach dem Abschaltbefehl öffnet erfindungsgemäß die Drosselklappe schnellstmöglichst auf einen vorgegebenen Wert, der z. B. 15° gegenüber der geschlossenen Position sein kann. Aber auch ein maximales Öffnen oder Zwischenstellungen sind denkbar. Auf Grund der hier um 15° geöffneten Drosselklappe strömt dann vermehrt Frischluft in die Brennkraftmaschine, so daß der Absolutdruck im Ansaugrohr ansteigt, hier von ca. 0,3 bar auf 0,8 bar. Die Brennräume werden so mit Frischluft gespült. Gleichzeitig und kontinuierlich sinkt die Drehzahl der Brennkraftmaschine auf Grund von Reibungskräften und Ladungswechselarbeit ab. Um die beschriebenen Geräusch- bzw. Komfortprobleme während des Auslaufens zu reduzieren schließt dann die Drosselklappe nach einiger Zeit bzw. nach einigen Kurbelwellenumdrehungen wieder. Im gezeigten Beispiel ist die Drosselklappe nach zwei Umdrehungen wieder geschlossen. Erfindungsgemäß gilt es nun rechtzeitig vor dem Stillstand der Brennkraftmaschine nochmals Frischluft in die Zylinder zu saugen und dadurch den Motor kontrolliert in einer gewünschten Kurbelwellenposition zum Stillstand zu bringen. Das geeignete Signal zur Identifikation dieses Zylinders kann sich nun wie beschrieben z. B. aus der Drehzahl, dem Ansaugrohrdruck oder dem zurückgelegten Kurbelwellenwinkel nach dem Abschaltbefehl ergeben. In dem gezeigten Diagramm wird daher beispielsweise nach der fünften Kurbelwellenumdrehung seit dem Abschaltbefehl bzw. nach 1800° zurückgelegtem Kurbelwellenwinkel die Drosselklappe noch einmal kontrolliert geöffnet. Durch das zu diesem Zeitpunkt geöffnete Gaseinlaßventil des ersten Zylinders (EV #1) saugt sich so der erste Zylinder erfindungsgemäß voll Frischluft und baut dadurch einen erhöhten Kompressionswiderstand auf, der den Motor in gewünschter Kurbelwellenposition zum Stillstand bringt.

## Patentansprüche

1. Verfahren zum kontrollierten Abstellen einer Brennkraftmaschine (1) mit Fremdzündung mit mindestens einem Brennraum (2) gebildet durch einen Zylinder (3) und einen Kolben (4), und einem zugehörigen Verbrennungsluftansaugsystem (9) enthaltend mindestens eine Drosselklappe (8) und/oder anderes variables Gaszumeßsystem sowie eine Motorsteuerung, bei dem die Drosselklappe (8) mindestens einmal während des Abstellens der Brennkraftmaschine (1) geöffnet wird
**dadurch gekennzeichnet, daß**
die Drosselklappe (8) mindestens einmal während des Abstellens der Brennkraftmaschine (1) geschlossen wird, und
zur Ansteuerung der Drosselklappe (8) ein Ansaugrohrunterdrucksignal, ein Drehzahlsignal, und/oder ein Kurbelwellen- oder Nockenwellendrehwinkelsignal verwendet wird.

2. Verfahren nach Anspruch 1,
**dadurch gekennzeichnet, daß**
die Drosselklappe (8) während des letzten Ansaugvorgangs des späteren, sich bei Motorstillstand ergebenden Kompressionszylinders, geöffnet wird.

3. Verfahren nach Anspruch 1 oder 2,
**dadurch gekennzeichnet, daß**
die Drosselklappe (8) während des letzten Ansaugvorgangs des späteren, sich bei Motorstillstand ergebenden Expansionszylinders, geöffnet wird.

4. Brennkraftmaschine,
**dadurch gekennzeichnet, daß**
sie dazu geeignet ist, ein Verfahren nach mindestens einem der Ansprüche 1 bis 3 auszuführen.

## Claims

1. Method for the controlled switching off of an internal combustion engine (1) with spark ignition and having at least one combustion chamber (2) formed by a cylinder (3) and a piston (4), and having an associated combustion air intake system (9) comprising at least one throttle valve (8) and/or another variable gas metering system, and also an engine controller, in which the throttle valve (8) is opened at least once during the switching off operation of the internal combustion engine (1)
**characterized in that**
the throttle valve (8) is closed at least once during the switching off operation of the internal combustion engine, and an intake pipe vacuum pressure signal, a rotational speed signal, and/or a crankshaft or camshaft rotational angle signal is used to actuate the throttle valve (8).

2. Method according to Claim 1,
**characterized in that**
the throttle valve (8) is opened during the last intake process of the cylinder which later, when the engine is stationary, becomes the compression cylinder.

3. Method according to Claim 1 or 2,
**characterized in that**
the throttle valve (8) is opened during the last intake process of the cylinder which later, when the engine is stationary, becomes the expansion cylinder.

4. Internal combustion engine,
**characterized in that**
it is suitable for carrying out a method according to at least one of Claims 1 to 3.

## Revendications

1. Procédé pour l'arrêt contrôlé d'un moteur à combustion interne (1) à allumage commandé comprenant au moins une chambre de combustion (2) formée par un cylindre (3) et un piston (4), et un système d'admission d'air comburant (9) associé contenant au moins un clapet d'étranglement (8) et/ou un autre système d'admission de gaz variable ainsi qu'une commande de moteur, dans lequel le clapet d'étranglement (8) est ouvert au moins une fois pendant l'arrêt du moteur à combustion interne (1),
**caractérisé en ce que**
le clapet d'étranglement (8) est fermé au moins une fois pendant l'arrêt du moteur à combustion interne (1), et
pour la commande du clapet d'étranglement (8), on utilise un signal de dépression du conduit d'admission, un signal de vitesse de rotation et/ou un signal d'angle de rotation du vilebrequin ou de l'arbre à came.

2. Procédé selon la revendication 1,
**caractérisé en ce que**
le clapet d'étranglement (8) est ouvert pendant la dernière opération d'admission du cylindre de compression le plus tardif, se produisant lors de l'arrêt du moteur.

3. Procédé selon la revendication 1 ou 2,
**caractérisé en ce que**
le clapet d'étranglement (8) est ouvert pendant la dernière opération d'admission du cylindre de détente le plus tardif, se produisant lors de l'arrêt du moteur.

4. Moteur à combustion interne,
**caractérisé en ce**
**qu'**il est prévu pour mettre en oeuvre un procédé selon au moins l'une quelconque des revendications 1 à 3.
